# EUROPEAN PATENT APPLICATION

(11) **EP 4 831 608 A1**
(43) Date of publication of application: **28.10.2026**
(21) Application number: 24907145.7
(22) Date of filing: 03.12.2024
(51) Int. Cl.: G01N 15/0205

(54) **PARTICLE SIZE DISTRIBUTION MEASUREMENT DEVICE, PARTICLE SIZE DISTRIBUTION MEASUREMENT METHOD, AND PROGRAM FOR PARTICLE SIZE DISTRIBUTION MEASUREMENT DEVICE**

(30) Priority: 22.12.2023 JP 2023216562
(71) Applicant: HORIBA, Ltd., Kyoto-shi Kyoto 601-8510 (JP)
(72) Inventor: SUGASAWA, Hirosuke, Kyoto-shi, Kyoto 601-8510 (JP)
(74) Representative: Isarpatent
(86) International application number: PCT/JP2024/042708
(87) International publication number: WO 2025/134758

(57) **Abstract**

The present invention is to facilitate comprehensive recognition of various kinds of saved operations, states of the device, and instantaneous values of particle size measurement results in a particle size distribution measurement device. A particle size distribution measurement device 100 includes a history data management unit 33 that stores, in a history data storage unit D1, an operation history indicating a history of operations performed by an operator on the particle size distribution measurement device 100, and a measurement result history indicating a history of particle size measurement results or a device state history indicating a history of states of the particle size distribution measurement device 100, in a form displayable as time series graphs.

## Description

### Technical Field

The present invention relates to a particle size distribution measurement device, a program for the particle size distribution measurement device, and a particle size distribution measurement method.

### Background Art

In recent years, in a particle size distribution measurement device disclosed in Patent Literature 1 or the like, data integrity is required in some cases from the viewpoint of prevention of falsification of measurement results, ensuring of validities, or the like.

Therefore, in a particle size distribution measurement device, an audit trail is used to verify data integrity. In this audit trail, events that occur in the particle size distribution measurement device are associated with the dates and times, and the users, and are then saved.

In the above audit trail, however, events (for example, an operation, the occurrence of an error, and the like) that have occurred can be checked, but the background and validity of an act such as "the ultrasound time was extended for one minute, because bubbles in the sample were visually observed" cannot be checked later.

### Citation List

### Patent Literature

Patent Literature 1: JP 2017-167081 A

### Summary of Invention

### Technical Problem

Therefore, the present invention has been made in view of the problem as above, and a main objective thereof is to facilitate comprehensive recognition of various kinds of saved operations, states of the device, and instantaneous values of particle size measurement results in a particle size distribution measurement device.

### Solution to Problem

Specifically, a particle size distribution measurement device according to the present invention is a particle size distribution measurement device that irradiates particles to be measured with light, detects secondary light generated by the irradiation, and calculates a particle size distribution of the particles on the basis of detection data of the secondary light. The particle size distribution measurement device includes a history data management unit that stores, in a memory, an operation history indicating a history of operations performed by an operator on the particle size distribution measurement device, and one of a measurement result history indicating a history of particle size measurement results or a device state history indicating a history of states of the particle size distribution measurement device, the operation history and the one of the measurement result history or the device state history each being stored in a form displayable as a time series graph.

With such a particle size distribution measurement device, the operation history, and the measurement result history or the device state history are stored in a form that can be displayed as time series graphs. Thus, the operation history, and the measurement result history or the device state history can be displayed as time series graphs. As a result, in the particle size distribution measurement device, it is possible to facilitate comprehensive recognition of various kinds of saved operations, states of the device, and instantaneous values of particle size measurement results.

As a specific embodiment, the particle size distribution measurement device according to the present invention preferably further includes a display control unit that displays the time series graph of the operation history, and the time series graph of the measurement result history or the time series graph of the device state history, on a display in a comparable manner.

Note that history data including the operation history, and the measurement result history or the device state history stored in the memory can be transmitted to an external information processing device, and be displayed on a display of the external information processing device.

The display control unit preferably displays the time series graph of the operation history, and the time series graph of the measurement result history or the time series graph of the device state history, on the horizontal axis or the vertical axis indicating time on the same scale. Also, the display control unit preferably displays the time series graph of the operation history, and the time series graph of the measurement result history or the time series graph of the device state history, in synchronization with each other.

With this configuration, it is possible to further facilitate recognition of particle size measurement results or device states corresponding to the saved various operations. For example, the time series graph of the operation history, and the time series graph of the measurement result history or the time series graph of the device state history are arranged and displayed vertically in a case where the horizontal axis is the time axis, and are arranged and displayed horizontally in a case where the vertical axis is the time axis, so that the correspondence relationship between various operations, and measurement results or the device states corresponding to the operations can be recognized at a glance.

The display control unit preferably displays the time series graph of the operation history, and the time series graph of the measurement result history or the time series graph of the device state history, in the same graph.

With this configuration, the time series graph of the operation history, and the time series graph of the measurement result history or the time series graph of the device state history are displayed in the same graph, and thus, the correspondence relationship between various operations, and measurement results or device states corresponding to the operations can be recognized at a glance.

The display control unit preferably sequentially updates and displays trend information in real time, the trend information including an operation performed by the operator on the particle size distribution measurement device, and a particle size measurement result or a state of the particle size distribution measurement device.

With this configuration, the operator can view the trend information displayed in real time, and determine whether the preprocessing has been appropriately performed, whether the measurement condition is appropriate, or the like.

The particle size distribution measurement device according to the present invention may be of a laser diffraction scattering type. Specifically, the particle size distribution measurement device according to the present invention preferably further includes: a cell that accommodates a sample obtained by dispersing the particles to be measured in a dispersion medium; a laser light source that irradiates the cell with laser light; a photodetector that detects diffracted/scattered light generated in the sample; and a particle size distribution calculation unit that calculates a particle size distribution of the particles on the basis of detection data obtained by the photodetector.

Examples of the operation performed on the particle size distribution measurement device include feed of particles, defoaming, optical axis adjustment, blank measurement, main measurement, abnormality detection, a change in the device state, and the like. Therefore, the operation history includes at least one of the followings: feed of particles, defoaming of a sample, optical axis adjustment, blank measurement, main measurement, abnormality detection, and a change in the device state.

Examples of states in the particle size distribution measurement device include circulation parameters including the water level or the circulation speed of the dispersion medium, ultrasound parameters including the intensity or the application time of ultrasound waves, and agitator parameters such as the intensity or the operation time of the agitator. Therefore, the device state history includes at least one of the following: circulation parameters including the water level or the circulation speed of the dispersion medium, ultrasound parameters including the intensity or the application time of ultrasound waves, and agitator parameters such as the intensity or the operation time of the agitator.

Further, a program for a particle size distribution measurement device according to the present invention is used in a particle size distribution measurement device that irradiates particles to be measured with light, detects secondary light generated by the irradiation, and calculates a particle size distribution of the particles on the basis of detection data of the secondary light, the program causing a computer to have a function as a history data management unit that stores, in a memory, an operation history indicating a history of operations performed by an operator on the particle size distribution measurement device, and one of a measurement result history indicating a history of particle size measurement results or a device state history indicating a history of states of the particle size distribution measurement device, the operation history and the one of the measurement result history or the device state history each being stored in a form displayable as a time series graph.

Furthermore, a particle size distribution measurement method according to the present invention is a particle size distribution measurement method for irradiating particles to be measured with light, detecting secondary light generated by the irradiation, and calculating a particle size distribution of the particles on the basis of detection data of the secondary light, and includes storing, in a memory, an operation history indicating a history of operations performed by an operator on a particle size distribution measurement device, and one of a measurement result history indicating a history of particle size measurement results or a device state history indicating a history of states of the particle size distribution measurement device, the operation history and the one of the measurement result history or the device state history each being stored in a form displayable as a time series graph.

### Advantageous Effects of Invention

According to the present invention described above, in a particle size distribution measurement device, it is possible to facilitate comprehensive recognition of various kinds of saved operations, states of the device, and instantaneous values of particle size measurement results.

### Brief Description of Drawings

FIG. 1 is a schematic diagram illustrating an entire particle size distribution measurement device according to an embodiment of the present invention.
FIG. 2 is a functional configuration diagram of an arithmetic device according to the embodiment.
FIG. 3 illustrates time series graphs of an operation history and a measurement result history according to the embodiment.
FIG. 4 illustrates time series graphs of an operation history and a measurement result history according to the embodiment.
FIG. 5 illustrates time series graphs of an operation history and a device state history according to the embodiment.
FIG. 6 is a schematic diagram illustrating a real-time display screen according to the embodiment.
FIG. 7 is a schematic diagram illustrating a real-time display screen according to a modification of the embodiment.
FIG. 8 is a schematic diagram illustrating a display mode of a time series graph of an operation history and a time series graph of a measurement result history according to a modification of the embodiment.

### Description of Embodiments

### <One embodiment of the present invention>

In the description below, an embodiment of a particle size distribution measurement device according to the present invention will be explained with reference to the drawings. Note that, for easier understanding, any of the drawings described below is schematically drawn in an exaggerated manner, with some portions omitted as appropriate. The same components are denoted by the same reference numerals, and explanation thereof will be omitted as appropriate.

### <Basic configuration of particle size distribution measurement device 100>

A particle size distribution measurement device 100 according to the present embodiment is designed to measure a particle size distribution by detecting diffracted/scattered light, taking advantage of the fact that the light intensity distribution corresponding to the divergence angle of diffracted/scattered light generated when the particles are irradiated with light is determined by the particle size from the MIE scattering theory.

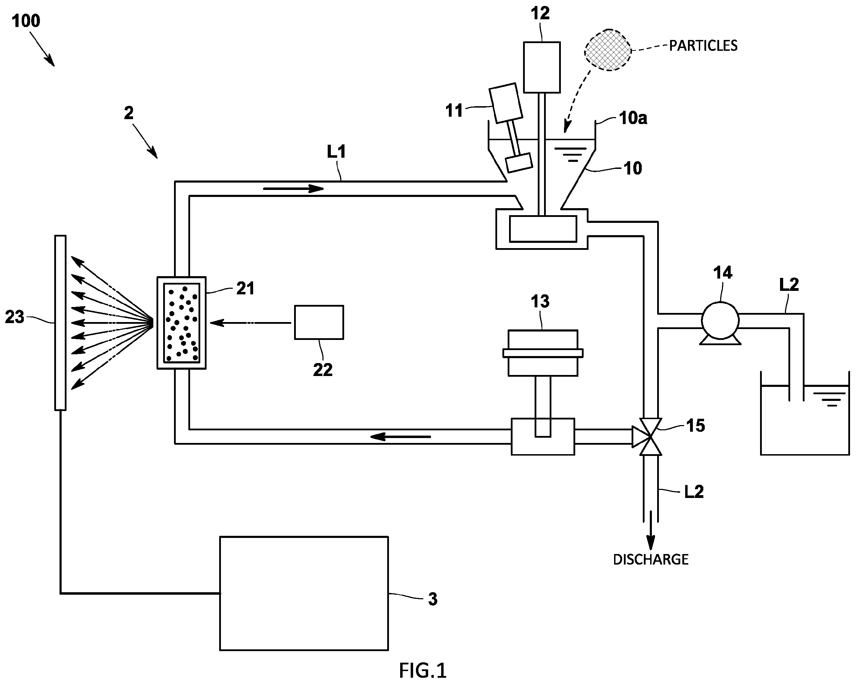

Specifically, as illustrated in FIG. 1, the particle size distribution measurement device 100 includes a device main body 2 that performs various processes related to actual measurement, and an arithmetic control unit 3 that controls each process in the device main body 2 and calculates a particle size distribution.

As illustrated in FIG. 1, the device main body 2 includes: a cell 21 that accommodates a sample obtained by dispersing the particles to be measured in a dispersion medium; a laser light source 22 that irradiates the cell 21 with laser light; and a plurality of photodetectors 23 that detect intensity distributions of transmitted light that has passed through the cell 21 and diffracted/scattered light that has been diffracted and/or scattered by the cell 21.

The cell 21 is transparent and accommodates a sample obtained by dispersing particles in a dispersion medium such as water. The cell 21 of the present embodiment is of a circulatory wet type, and is provided on a sample circulation channel L1.

On the sample circulation channel L1, a mixing bath 10 that has a particle inlet 10a and is designed to mix the dispersion medium and the particles, an agitator 11 for agitating the dispersion medium and the particles in the mixing bath 10, a circulation pump 12 for circulating the sample, an ultrasonic oscillator 13 for disaggregating and dispersing the particles, and the like are provided. In addition to that, a replenishment channel L2 having a replenishment pump 14 for replenishing the sample circulation channel L1 with the dispersion medium is connected to the sample circulation channel L1, and a discharge channel L3 for discharging the sample is also connected to the sample circulation channel L1 via a switching valve 15.

The laser light source 22 emits coherent light, and is a semiconductor laser herein. The laser light source 22 can adjust the optical axis, and the intensity of light to be emitted.

The plurality of photodetectors 23 is discretely arranged on the optical axis of the laser light source 22 and, for example, on the same circumference within a predetermined angle range from the optical axis with the cell 21 as the center, and, at each angle, detects the intensity of transmitted light traveling straight on the optical axis and light scattered at various angles by the sample. Each photodetector 23 outputs a light intensity signal corresponding to the intensity of incident light.

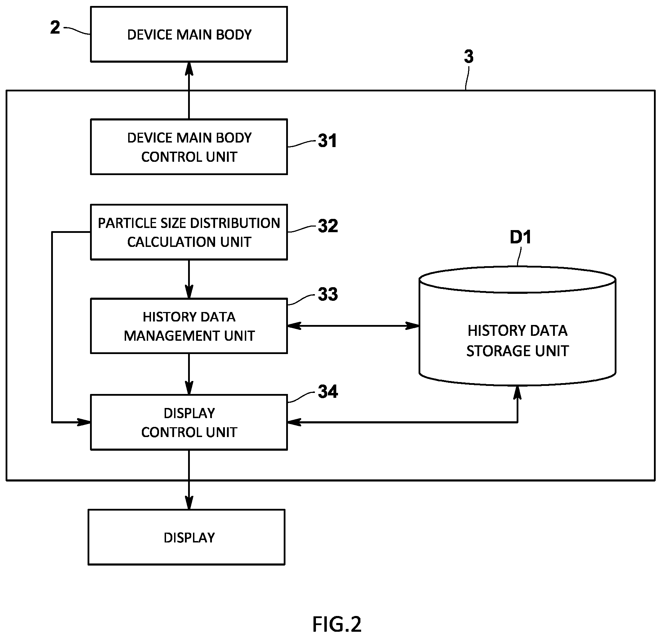

The arithmetic control unit 3 is a dedicated or general-purpose computer structurally including a CPU, a memory, an A/D converter, an input/output interface, a communication interface, and the like. By causing a CPU, peripheral devices, and the like to cooperate in accordance with a predetermined program stored in a predetermined region of the memory, The arithmetic control unit 3 exerts functions as a device main body control unit 31 that controls each component of the device main body 2, a particle size distribution calculation unit 32 that calculates a particle size distribution on the basis of a light intensity signal output from each photodetector 23, and the like, as illustrated in FIG. 2.

The device main body control unit 31 controls each component of the device main body 2 to perform particle size distribution measurement. Specifically, the device main body control unit 31 monitors and controls, for example, the laser light source 22, the photodetectors 23, the agitator 11, the circulation pump 12, the ultrasonic oscillator 13, and the like.

The particle size distribution calculation unit 32 receives light intensity signals output from the respective photodetectors 23, and calculates particle size distribution data representing a particle size distribution from these values according to an algorithm based on the MIE scattering theory. The particle size distribution calculation unit 32 can calculate a representative particle size obtained from the calculated particle size distribution data. Note that the representative particle size is a particle size corresponding to each value of a plurality of preset passage integration degrees, and more specifically, is a particle size corresponding to a passage integration degree of 10% ( this particle size will be hereinafter also referred to as D10 or the representative small particle size), a particle size corresponding to a passage integration degree of 50% (this particle size will be hereinafter also referred to as the median size, D50, or the representative median particle size), a particle size corresponding to a passage integration degree of 90% (this particle size will be hereinafter also referred to as D90 or the representative large particle size), or the like.

Thus, the arithmetic control unit 3 of the present embodiment is designed so that the user can recognize results of measurement or of the particle sizes corresponding to various kinds of operations performed in the size or the device state in the particle size distribution measurement device 100. Specifically, the arithmetic control unit 3 includes a history data management unit 33 that stores various histories related to the particle size distribution measurement device 100 in a history data storage unit D1 formed with a memory.

The history data management unit 33 stores, in the history data storage unit D1, an operation history indicating a history of operations performed by an operator on the particle size distribution measurement device 100, a measurement result history indicating a history of particle size measurement results, and a device state history indicating a history of states of the particle size distribution measurement device 100 in a form displayable as time series graphs.

Here, the operation history includes at least one of the following: feed of particles into the particle inlet 10a, defoaming of the sample in the sample circulation channel L1, adjustment of the optical axis of the laser light source 22, blank measurement to be performed in a state where only the dispersion medium is put in the cell 21, main measurement to be performed in a state where the sample is put in the cell 21, detection of an abnormality such as a communication error, and changing of the device state as described later.

The device state includes at least one of a circulation parameter in the sample circulation channel L1, an ultrasound parameter in the ultrasonic oscillator 13, and an agitation parameter in the agitator 11. The circulation parameter includes a water level of the dispersion medium in the mixing bath 10, a circulation speed (a circulation pump speed) of the sample, or the like. The ultrasound parameter includes an operation time of the ultrasonic oscillator 13 (an application time of ultrasound waves), an intensity of ultrasound waves, the presence or absence of an operation of the ultrasonic oscillator 13 during measurement, or the like. The agitation parameter includes an agitation speed (an agitation intensity), an operation time of the agitator 11, or the like.

Specifically, the history data management unit 33 stores the contents of each operation associated with the time when each corresponding operation was performed, stores a particle size measurement result associated with the measurement time corresponding to the measurement result, and stores each device state associated with the time corresponding to each corresponding device state, to store each of these histories into the history data storage unit D1 in a form displayable as time series graphs.

The arithmetic control unit 3 further includes a display control unit 34 that displays a time series graph of the operation history, and a time series graph of the measurement result history or a time series graph of the device state history on a display in a comparable manner, on the basis of the respective pieces of history data stored in the history data storage unit D1.

The display control unit 34 displays the time series graph of the operation history, and the time series graph of the measurement result history or the time series graph of the device state history, with the scales of the time-indicating horizontal axes or vertical axes being aligned. The display control unit 34 also displays the time series graph of the operation history, and the time series graph of the measurement result history or the time series graph of the device state history, in synchronization with each other.

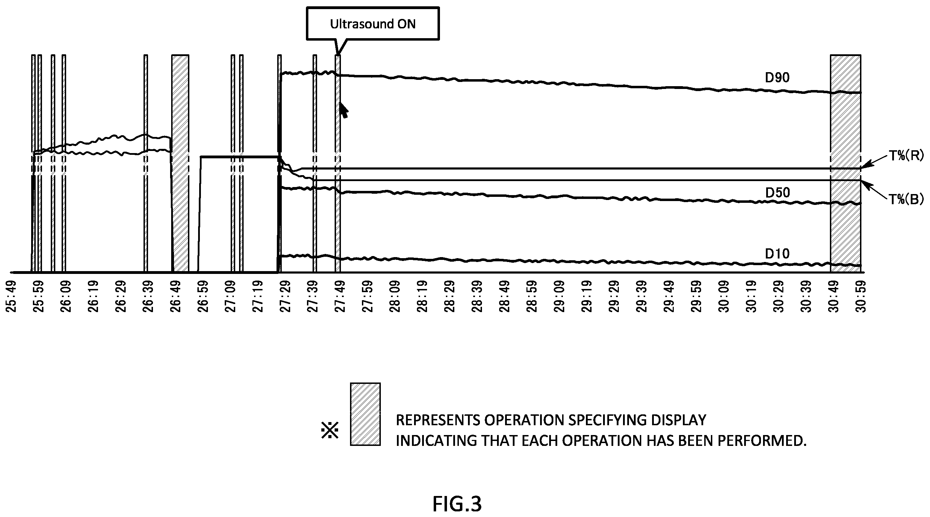

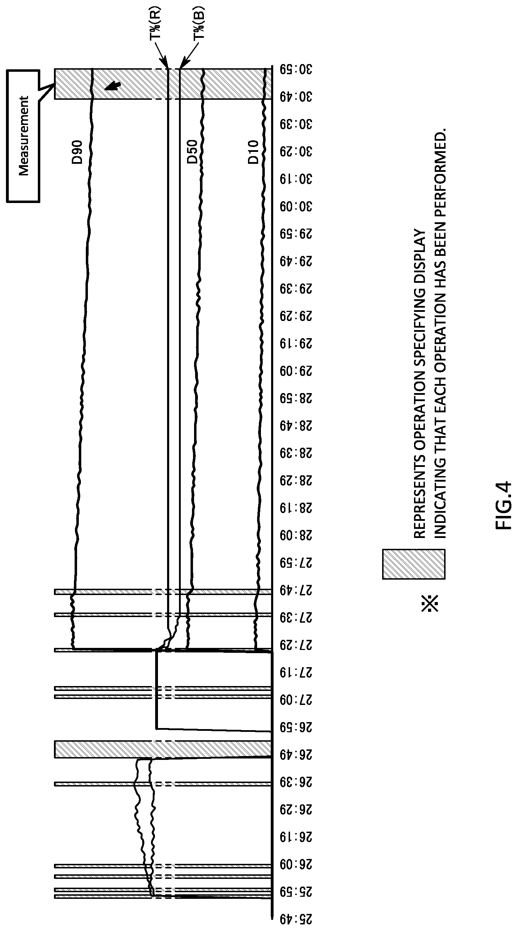

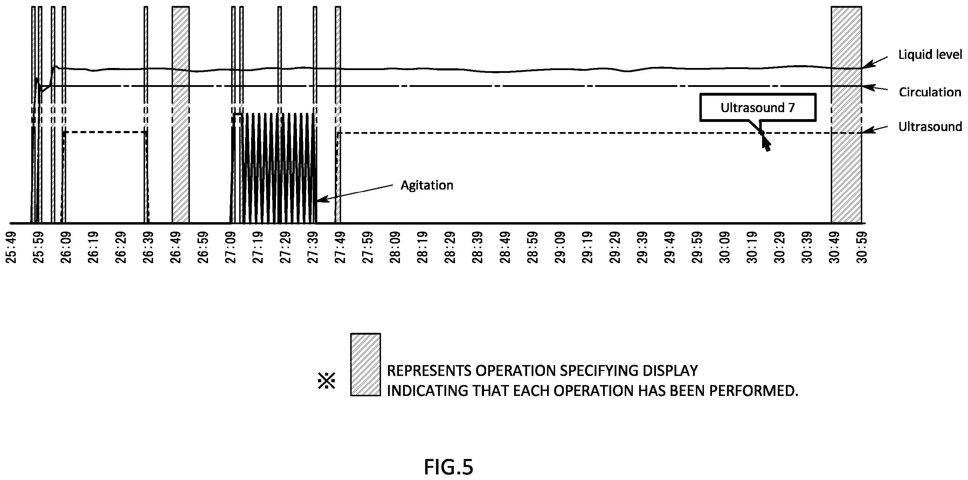

The display control unit 34 of the present embodiment displays the time series graph of the operation history and the time series graph of the measurement result history in the same graph as illustrated in FIGS. 3 and 4, or displays the time series graph of the operation history and the time series graph of the device state history in the same graph as illustrated in FIG. 5. That is, the display control unit 34 displays the time series graph of the operation history and the time series graph of the measurement result history in a superimposed manner, and displays the time series graph of the operation history and the time series graph of the device state history in a superimposed manner.

Specifically, as illustrated in FIGS. 3 and 4, the display control unit 34 performs operation specifying display to indicate that each operation was performed at the time when each operation was performed, in the same graph with the horizontal axis serving as the time axis, and displays the measurement result. Also, as illustrated in FIG. 5, the display control unit 34 performs operation specifying display to indicate that each operation was performed at the time when each operation was performed, and displays the device state in the same graph with the horizontal axis serving as the time axis.

Here, the operation specifying display corresponds to the time of the start of an operation and/or the end of an operation, for example, and is a linear or band-shaped display extending along the vertical axis, for example. Note that some other display mode may be adopted, as long as the fact that an operation has been performed can be recognized from the graph. Further, a pointing device is placed on the operation specifying display or the like to make a selection, so that specific operation contents (for example, "activation of the ultrasonic oscillator (Ultrasound ON)" in FIG. 3 or "start of measurement (Measurement)" in FIG. 4) are displayed in accordance with the operation specifying display. Also, the representative particle sizes (for example, D10, D50, and D90) and the transmittances (for example, T% (R) and T% (B)) obtained from the particle size distribution data are displayed as the measurement results.

Further, as illustrated in FIG. 5, for example, the water level of the dispersion medium (Liquid level), the circulation speed (Circulation), the ultrasound intensity (Ultrasound), and the agitator operation (Agitation) are displayed as the device state. Also, a pointing device is placed on the device state at a specific time or the like in a graph indicating the device state, so that the specific contents (for example, "ultrasound intensity 7 (Ultrasound 7)" in FIG. 5) of the device state at the specific time are displayed.

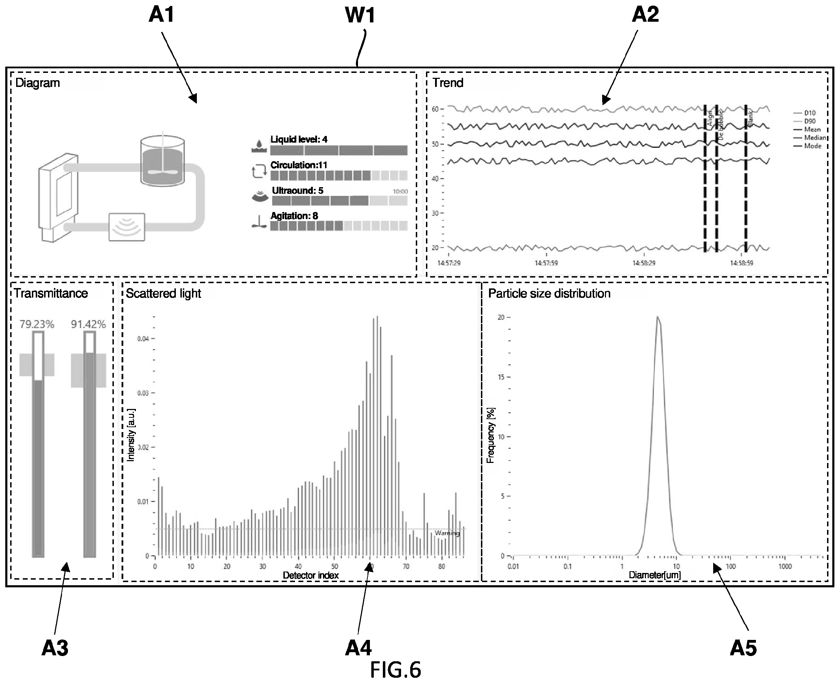

Furthermore, in addition to the function of displaying a time series graph of each history, the display control unit 34 of the present embodiment can display a trend information screen W1 that sequentially updates and displays the current trend information in real time as illustrated in FIG. 6.

The trend information screen W1 includes an operation performed by the operator on the particle size distribution measurement device 100, and a particle size measurement result or a state of the particle size distribution measurement device 100. Specifically, the trend information screen W1 includes a display area A1 for the device state, a display area A2 displaying time series graphs of measurement results (for example, representative particle sizes) and operation contents, a display area A3 displaying transmittances, a display area A4 displaying light intensity signals of the respective photodetectors, and a display area A5 displaying a particle size distribution. Using various kinds of information displayed on the trend information screen W1, the operator can perform defoaming of the sample in the sample circulation channel L1, adjustment of the optical axis of the laser light source 22, blank measurement to be performed in a state where only the dispersion medium is put in the cell 21, main measurement to be performed in a state where the sample is put in the cell 21, changing of the device state, or the like. Note that, when each operation is performed, an operation specifying display (bold dotted lines in FIG. 6) for specifying each operation is displayed in the time series graph in the display area A2.

### <Effects of the present embodiment>

With the particle size distribution measurement device 100 of the present embodiment designed as described above, the operation history, and the measurement result history or the device state history are stored in a form that can be displayed as time series graphs. Thus, the operation history, and the measurement result history or the device state history can be displayed as time series graphs. As a result, in the particle size distribution measurement device, it is possible to facilitate comprehensive recognition of various kinds of saved operations, states of the device, and instantaneous values of particle size measurement results.

### <Other embodiments>

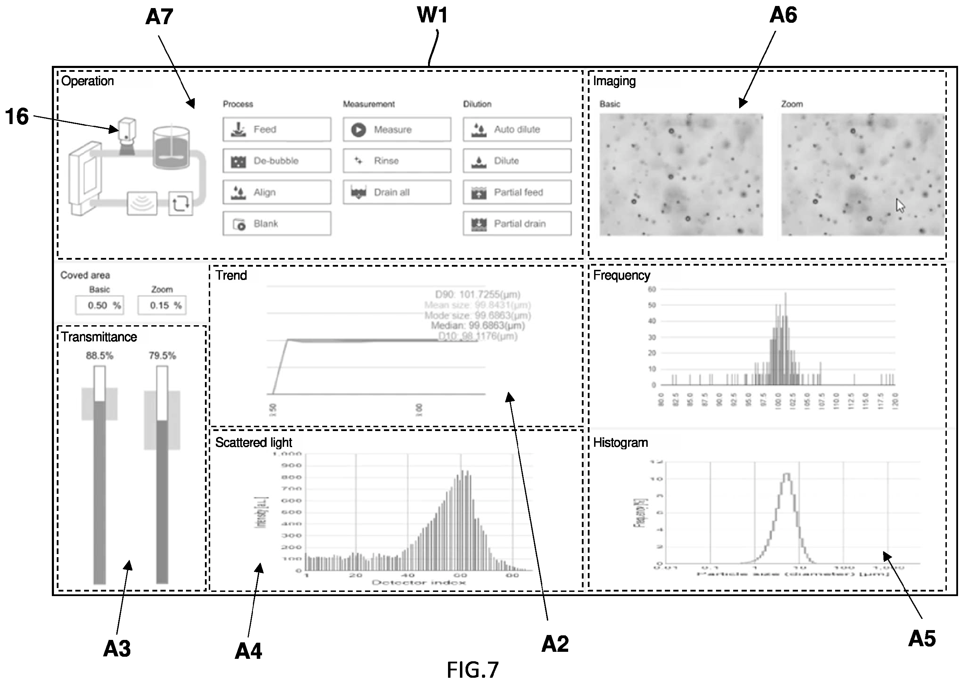

For example, an imaging camera 16 that images a sample circulating through the sample circulation channel L1 may be included in the configuration. As illustrated in FIG. 7, an image captured by the imaging camera 16 can be displayed in an image display area A6 of the trend information screen W1. With this display area, a scattered state of the particles in the sample can be checked. An operation screen area A7 for operating the device main body 2 is also displayed on the trend information screen W1 illustrated in FIG. 7. Various settings of the device main body 2 can be performed with the operation screen area A7.

The present invention may also be applied to a particle size distribution measurement device using a nanoparticle tracking analysis (NTA) method. This NTA is a method by which, for example, scattered light from particles in a dispersion medium irradiated with laser light is captured by a camera, to acquire the behavior of each particle such as Brownian motion, and calculate the particle state from the behavior. In this case, the particle size distribution measurement device measures the particle size distribution of the particles contained in a cell, by imaging the cell irradiated with laser light.

The present invention may also be applied to a so-called dynamic-light-scattering particle size distribution measurement device that detects scattered light generated by irradiating a measurement target with light as secondary light, and calculates a particle size distribution on the basis of the fluctuation of the light intensity of the scattered light.

Further, the present invention may be applied to a so-called natural/centrifugal sedimentating particle size distribution measurement device that detects transmitted light obtained by irradiating a measurement target with light as secondary light, and calculates a particle size distribution on the basis of the change in the amount of the transmitted light.

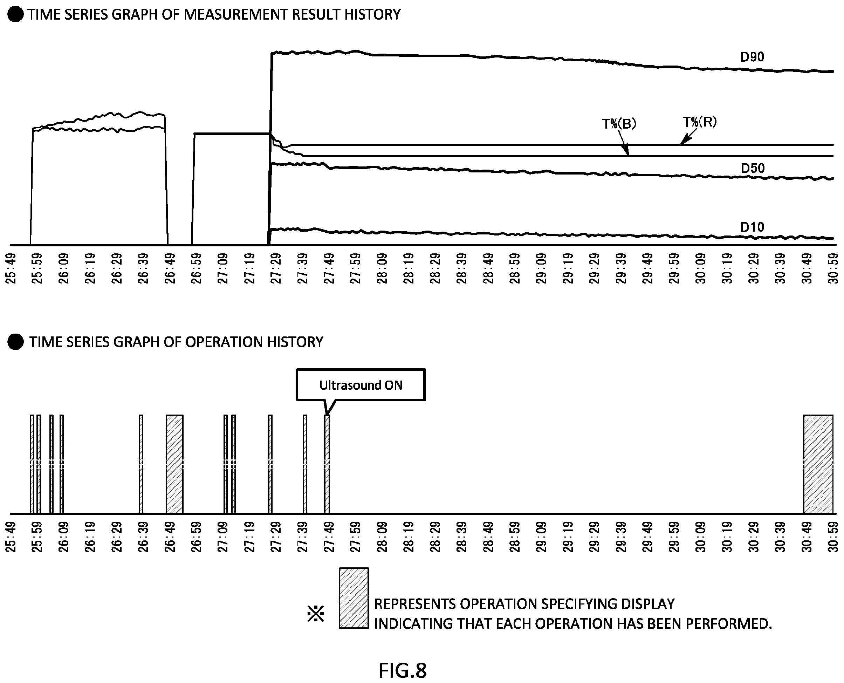

As illustrated in FIG. 8, the display control unit 34 may display the time series graph of the operation history and the time series graph of the measurement result history in separate time series graphs, and display the time series graph of the operation history and the time series graph of the device state history in separate time series graphs. In this case, these time series graphs may be simultaneously displayed on the same screen, or may be displayed on the screen in a switching manner. In these cases, the display control unit 34 desirably displays the time axes of the respective time series graphs on the same scale.

In addition to the above, various modifications and combinations of embodiments may be made without departing from the gist of the present invention.

### Industrial Applicability

According to the present invention, in a particle size distribution measurement device, it is possible to facilitate comprehensive recognition of various kinds of saved operations, states of the device, and instantaneous values of particle size measurement results.

### Reference Signs List

- 100: particle size distribution measurement device
- 21: cell
- 22: laser light source
- 23: photodetector
- 32: particle size distribution calculation unit
- 33: history data management unit
- D1: history data storage unit
- 34: display control unit

## Claims

1. A particle size distribution measurement device that irradiates particles to be measured with light, detects secondary light generated by the irradiation, and calculates a particle size distribution of the particles on a basis of detection data of the secondary light, the particle size distribution measurement device comprising
a history data management unit that stores, in a memory, an operation history indicating a history of operations performed by an operator on the particle size distribution measurement device, and one of a measurement result history indicating a history of particle size measurement results or a device state history indicating a history of states of the particle size distribution measurement device, the operation history and the one of the measurement result history or the device state history each being stored in a form displayable as a time series graph.

2. The particle size distribution measurement device according to claim 1, further comprising a display control unit that displays the time series graph of the operation history, and the one of the time series graph of the measurement result history or the time series graph of the device state history, on a display in a comparable manner.

3. The particle size distribution measurement device according to claim 2, wherein the display control unit displays the time series graph of the operation history, and the one of the time series graph of the measurement result history or the time series graph of the device state history, on one of a horizontal axis or a vertical axis indicating time on a same scale.

4. The particle size distribution measurement device according to claim 2 or 3, wherein the display control unit displays the time series graph of the operation history, and the one of the time series graph of the measurement result history or the time series graph of the device state history, in a same graph.

5. The particle size distribution measurement device according to any one of claims 2 to 4, wherein the display control unit sequentially updates and displays trend information in real time, the trend information including an operation performed by the operator on the particle size distribution measurement device, and one of a particle size measurement result or a state of the particle size distribution measurement device.

6. The particle size distribution measurement device according to any one of claims 1 to 5, further comprising:
a cell that accommodates a sample obtained by dispersing the particles to be measured in a dispersion medium;
a laser light source that irradiates the cell with laser light;
a photodetector that detects diffracted/scattered light generated in the sample; and
a particle size distribution calculation unit that calculates a particle size distribution of the particles on a basis of detection data obtained by the photodetector.

7. A program for a particle size distribution measurement device, the program being used in the particle size distribution measurement device that irradiates particles to be measured with light, detects secondary light generated by the irradiation, and calculates a particle size distribution of the particles on a basis of detection data of the secondary light, the program causing a computer to have a function as
a history data management unit that stores, in a memory, an operation history indicating a history of operations performed by an operator on the particle size distribution measurement device, and one of a measurement result history indicating a history of particle size measurement results or a device state history indicating a history of states of the particle size distribution measurement device, the operation history and the one of the measurement result history or the device state history each being stored in a form displayable as a time series graph.

8. A particle size distribution measurement method for irradiating particles to be measured with light, detecting secondary light generated by the irradiation, and calculating a particle size distribution of the particles on a basis of detection data of the secondary light, the particle size distribution measurement method comprising
storing an operation history indicating a history of operations performed by an operator on a particle size distribution measurement device, and one of a measurement result history indicating a history of particle size measurement results or a device state history indicating a history of states of the particle size distribution measurement device, the operation history and the one of the measurement result history or the device state history each being stored in a form displayable as a time series graph.
